# EUROPÄISCHE PATENTANMELDUNG

(11) **EP 4 797 489 A1**
(43) Veröffentlichungstag der Anmeldung: **26.08.2026**
(21) Anmeldenummer: 25159014.7
(22) Anmeldetag: 20.02.2025
(51) Int. Cl.: H02J 7/00, H01M 10/46, H01M 10/48, H01M 10/613, H01M 10/6235

(54) **AUFBEWAHRUNGS- UND LADEVORRICHTUNG FÜR AKKUMULATOREN**

(71) Anmelder: Hilti Aktiengesellschaft, 9494 Schaan (LI)
(72) Erfinder: Xie, Jingyi, 53175 Bonn (DE); Guillier, Léo, 76133 Karlsruhe (DE); Frotscher, Seti, 76133 Karlsruhe (DE); Braun, Lukas, 76185 Karlsruhe (DE); Schürmann, Emanuel, 76133 Karlsruhe (DE); Fleck, Joshua, 80469 München (DE)
(74) Vertreter: Hilti Aktiengesellschaft Corporate Intellectual Property

(57) **Zusammenfassung**

Vorrichtung zum Transportieren einer Anzahl an Akkumulatoren, insbesondere als Energiespeicher für eine Werkzeugmaschine mit einer Steuerungseinrichtung mit wenigstens einer Speichereinheit, einer Kommunikationseinrichtung zum Ein- und Ausgeben von Signalen, einer Navigationseinrichtung, einer Aufnahme- und Halteeinrichtung zum Aufnehmen und Halten wenigstens eines Akkumulators, einem Antrieb zum Antreiben der Vorrichtung, einer Fahrwerkseinrichtung mit einer Lenkeinheit sowie einer Energieversorgung wenigstens zur Versorgung des Antriebs mit elektrischer Energie.

Verfahren zum Steuern und Regeln einer Vorrichtung zum Transportieren einer Anzahl an Akkumulatoren.

System enthaltend eine Vorrichtung zum Transportieren einer Anzahl an Akkumulatoren sowie eine Ladevorrichtung zum Versorgen wenigstens eines Akkumulators mit elektrischer Energie.

## Beschreibung

Die vorliegende Erfindung betrifft eine Vorrichtung zum Aufbewahren und Versorgen einer Anzahl an Akkumulatoren, insbesondere als Energiespeicher für eine Werkzeugmaschine mit elektrischer Energie.

Des Weiteren betrifft die vorliegende Erfindung ein Verfahren zum Steuern und Regeln einer Vorrichtung zum Aufbewahren und Versorgen einer Anzahl an Akkumulatoren, insbesondere als Energiespeicher für eine Werkzeugmaschine mit elektrischer Energie.

Auf dem Markt erhältliche Akku-Ladeeinrichtungen, insbesondere Ladevorrichtungen zum Versorgen von Werkzeugmaschinen-Akkumulatoren mit elektrischer Energie, gemäß dem Stand der Technik sind für gewöhnlich mit einem Ladergehäuse ausgestaltet, an deren Oberseite sich eine Schnittstelle zum Verbinden mit einem Akkumulator befindet. Für den Fall, dass sich die Akku-Ladeeinrichtungen mit einem verbundenen Akkumulator in einem Außenbereich (d.h. nicht in einer Behausung) befindet, ist sowohl die Akku-Ladeeinrichtung als auch der Akkumulator unterschiedlichen Witterungsverhältnissen (z.B. Regen oder Sonneneinstrahlung) ausgesetzt. Diese Witterungsverhältnisse können zu Störungen beim Ladevorgang des Akkumulator oder sogar zu Beschädigungen an der Akku-Ladeeinrichtung und/oder an dem Akkumulator führen.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 5. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch eine Vorrichtung zum Aufbewahren und Versorgen einer Anzahl an Akkumulatoren, insbesondere als Energiespeicher für eine Werkzeugmaschine mit elektrischer Energie.

Erfindungsgemäß enthält die Vorrichtung ein Gehäuse mit wenigstens einer Eingabeeinrichtung zur Eingabe wenigstens eines Akkumulators in die Vorrichtung sowie wenigstens eine Ausgabeeinrichtung zur Ausgabe wenigstens eines Akkumulators aus der Vorrichtung, eine Steuerungseinrichtung mit wenigstens einer Speichereinheit, eine Kommunikationseinrichtung zum Ein- und Ausgeben von Signalen, eine Positionserfassungseinrichtung zum Erfassen wenigstens eines Positionswertes eines Akkumulators, eine Ausrichtungseinrichtung zum Ausrichten wenigstens eines Akkumulators in wenigstens eine Richtung und/oder um wenigstens eine Richtungsachse, wenigstens einen Sensor zum Erfassen wenigstens eines Kennwertes des wenigstens einen Akkumulators, wenigstens eine Ladeeinrichtung zum Versorgen wenigstens eines Akkumulators mit elektrischer Energie sowie eine Energieversorgung.

Gemäß einer weiteren vorteilhaften Ausführungsform kann es möglich sein, dass die Eingabeeinrichtung eine Verriegelungseinrichtung zum wahlweisen Verriegeln der Eingabeeinrichtung enthält.

Entsprechend einer weiteren vorteilhaften Ausführungsform kann es möglich sein, dass die Ausgabeeinrichtung eine Verriegelungseinrichtung zum wahlweisen Verriegeln der Ausgabeeinrichtung enthält.

Gemäß einer weiteren vorteilhaften Ausführungsform kann es möglich sein, dass die Verriegelungseinrichtung eine Signaleingabeeinheit zum reversiblen Einstellen der Verriegelungseinrichtung in einen verriegelten oder entriegelten Zustand enthält.

Gemäß einer vorteilhaften Ausführungsform kann es möglich sein, dass die Ausrichtungseinrichtung wenigstens erste Dreheinrichtung und eine zweite Dreheinrichtung enthält.

Entsprechend einer weiteren vorteilhaften Ausführungsform kann es möglich sein, dass eine Lagereinrichtung zum Aufnehmen und Lagern wenigstens eines Akkumulators enthalten ist.

Gemäß einer weiteren vorteilhaften Ausführungsform kann es möglich sein, dass eine Temperaturregeleinrichtung mit wenigstens einem Temperatursensor, wenigstens einer Kühleinheit und wenigstens einer Heizeinheit enthalten ist.

Darüber hinaus wird die Aufgabe gelöst durch ein Verfahren zum Steuern und Regeln einer Vorrichtung zum Aufbewahren und Versorgen einer Anzahl an Akkumulatoren, insbesondere als Energiespeicher für eine Werkzeugmaschine mit elektrischer Energie.

Erfindungsgemäß sind die folgenden Verfahrensschritte enthält:
- Einführen wenigstens eines Akkumulators in die Vorrichtung durch wenigstens eine Eingabeeinrichtung;
- Erfassen wenigstens eines Positionswertes des wenigstens einen Akkumulators durch eine Positionserfassungseinrichtung;
- Ausrichten des wenigstens eines Akkumulators in wenigstens eine Richtung und/oder um wenigstens eine Ausrichtungsachse;
- Erfassen wenigstens eines Kennwertes des wenigstens einen Akkumulators durch wenigstens einen Sensor;
- Verbinden des wenigstens einen Akkumulators mit einer Ladeeinrichtung zum Versorgen wenigstens eines Akkumulators mit elektrischer Energie in Abhängigkeit wenigstens eines erfassten Kennwertes; und
- Aussenden wenigstens eines Signals durch die Kommunikationseinrichtung, wenn wenigstens ein Ladezustandswert des wenigstens einen Akkumulators wenigstens einem in einer Speichereinheit der Vorrichtung hinterlegten Wert entspricht.

Bei dem Kennwert kann es sich um den Ladezustand (oder auch Ladekapazität oder Ladung), SoC (State of Charge) oder SoH (State of Health) eines Akkumulators handeln.

Gemäß einer vorteilhaften Ausführungsform können die zusätzlichen Verfahrensschritte enthalten sein:
- Verriegeln eines Akkumulators oder eines Sensormoduls in einer Aufnahmeeinheit mittels der Verriegelungseinrichtung durch Eingeben wenigstens eines ersten Signals an der Signaleingabeeinheit; und
- Entriegeln des wenigstens einen Akkumulators oder Sensormoduls von der Aufnahmeeinheit durch Eingabe wenigstens eines zweiten Signals an der Signaleingabeeinheit.

Entsprechend einer weiteren vorteilhaften Ausführungsform können die zusätzlichen Verfahrensschritte enthalten sein:
- Ausgeben des wenigstens einen Akkumulators aus der Vorrichtung durch die Eingabeeinrichtung oder die Ausgabeeinrichtung, wenn wenigstens ein vorbestimmtes Signal zur Ausgabe des wenigstens einen Akkumulators von der Kommunikationseinrichtung empfangen worden ist.

Gemäß einer weiteren vorteilhaften Ausführungsform können die zusätzlichen Verfahrensschritte enthalten sein:
- Aussenden wenigstens eines Signals durch die Kommunikationseinrichtung, wenn der wenigstens eine erfasste Kennwert des wenigstens einen Akkumulators nicht wenigstens einem in einer Speichereinheit der Vorrichtung hinterlegten Wert entspricht.

Entsprechend einer weiteren vorteilhaften Ausführungsform können die zusätzlichen Verfahrensschritte enthalten sein:
- Ausgeben des wenigstens einen Akkumulators aus der Vorrichtung durch die Eingabeeinrichtung oder eine Ausgabeeinrichtung, wenn der wenigstens eine erfasste Kennwert nicht wenigstens einem in einer Speichereinheit der Vorrichtung hinterlegten Wert entspricht.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Außenansicht auf eine erfindungsgemäße Vorrichtung gemäß einer beispielhaften Ausführungsform;
- Figur 2: eine Seitenansicht auf eine erfindungsgemäße Vorrichtung gemäß einer beispielhaften Ausführungsform in einem ersten Zustand;
- Figur 3: eine Seitenansicht auf die erfindungsgemäße Vorrichtung gemäß der beispielhaften Ausführungsform in einem zweiten Zustand;
- Figur 4: eine Seitenansicht auf die erfindungsgemäße Vorrichtung gemäß der beispielhaften Ausführungsform in einem dritten Zustand;
- Figur 5: eine Seitenansicht auf die erfindungsgemäße Vorrichtung gemäß der beispielhaften Ausführungsform in einem vierten Zustand;
- Figur 6: eine Seitenansicht auf die erfindungsgemäße Vorrichtung gemäß der beispielhaften Ausführungsform in einem fünften Zustand;
- Figur 7: eine Seitenansicht auf die erfindungsgemäße Vorrichtung gemäß der beispielhaften Ausführungsform in einem sechsten Zustand;
- Figur 8: eine Seitenansicht auf die erfindungsgemäße Vorrichtung gemäß der beispielhaften Ausführungsform in einem siebten Zustand;
- Figur 9: eine perspektivische Ansicht auf die Ausrichtungseinrichtung gemäß einer beispielhaften Ausführungsform; und

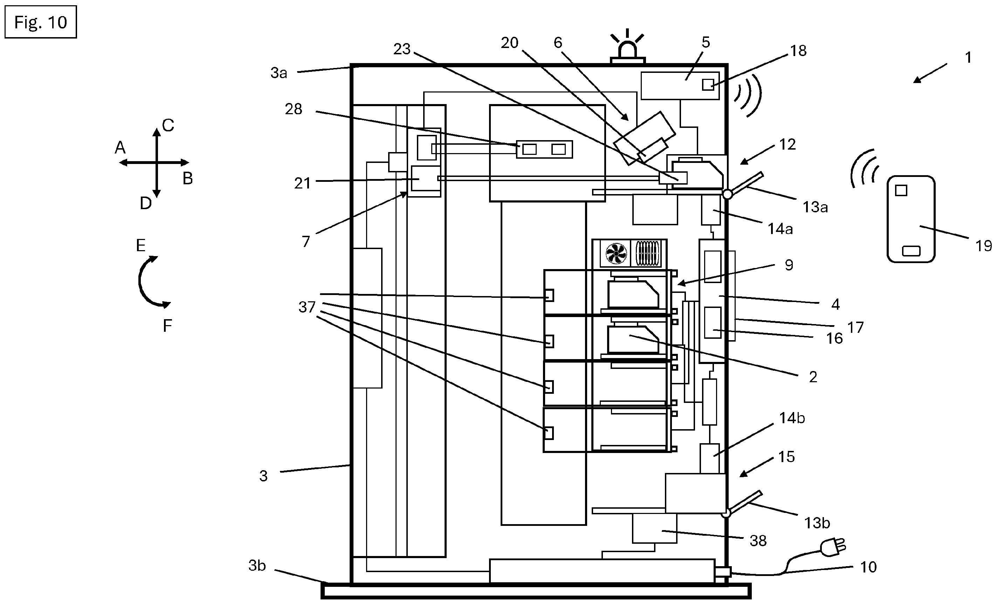

- Figur 10: eine Seitenansicht auf die erfindungsgemäße Vorrichtung gemäß einer weiteren beispielhaften Ausführungsform.

### Ausführungsbeispiele:

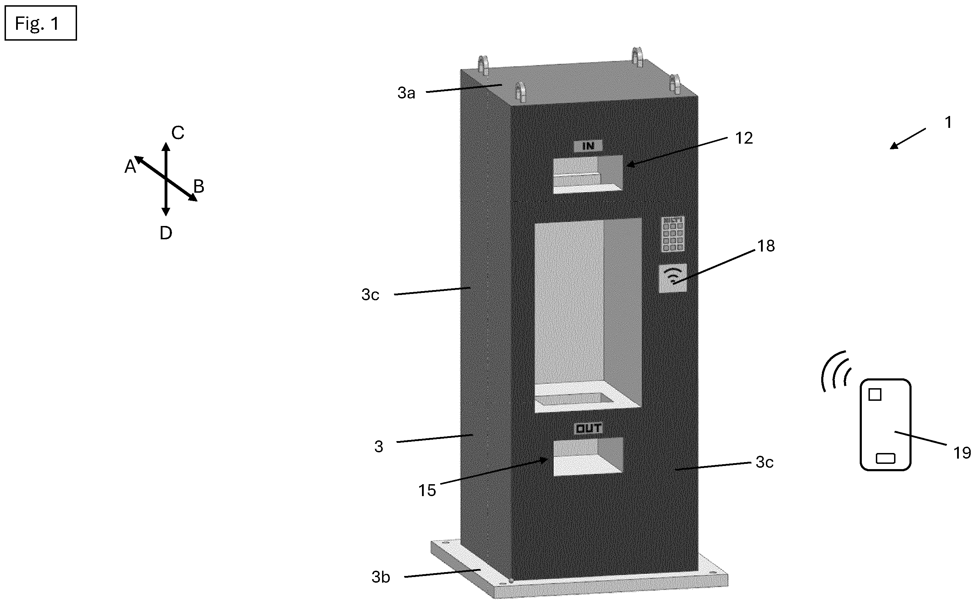

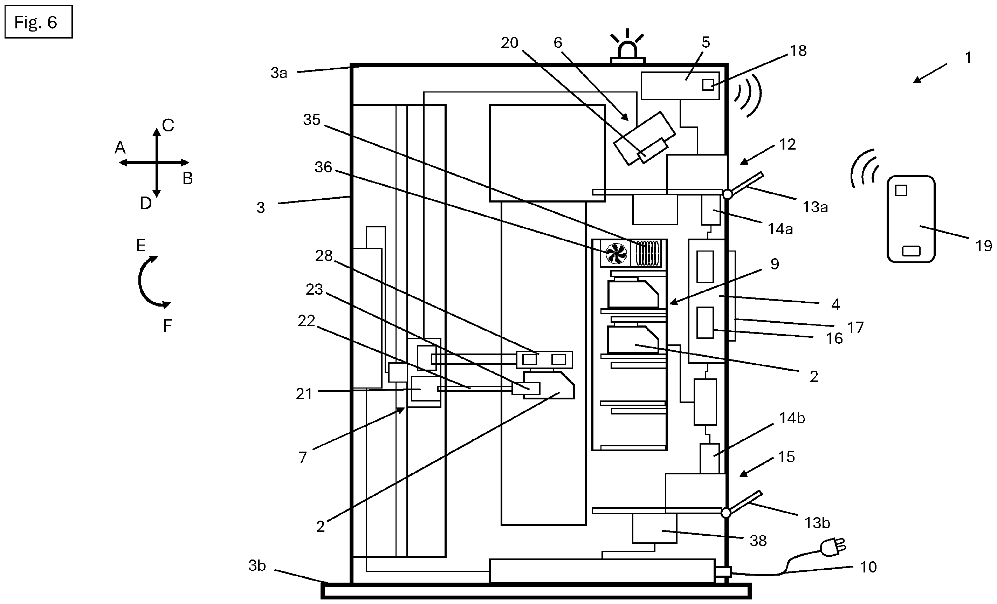

In Figur 1 bis 8 ist eine Vorrichtung 1 gemäß einer beispielhaften Ausführungsform zum Aufbewahren und Versorgen einer Anzahl an Akkumulatoren 2, insbesondere als Energiespeicher für eine Werkzeugmaschine, mit elektrischer Energie gezeigt.

Die Vorrichtung 1 enthält im Wesentlichen ein Gehäuse 3, eine Steuerungseinrichtung 4, eine Kommunikationseinrichtung 5, eine Positionserfassungseinrichtung 6, eine Ausrichtungseinrichtung 7, eine Anzahl an Sensoren 8, eine Ladeeinrichtung 9 sowie eine Energieversorgung 10.

Das Gehäuse 3 enthält im Wesentlichen ein Deckel 3a, einen Boden 3b und vier Seitenwände 3c. In den Figuren sind lediglich zwei gegenüberliegende Seitenwände angedeutet.

Auf dem Deckel 3a ist eine Signallampe 11 positioniert, die mit der Steuerungseinrichtung 4 über eine Leitung in Verbindung steht. Die Signallampe 11 dient als Orientierungshilfe zum Auffinden der Vorrichtung 1 und kann durch ein entsprechendes Signal, das über die Kommunikationseinrichtung 5 drahtlos (z.B. per Funk) empfangen werden kann, aktiviert werden. Die Verbindungsleitung ist in den Figuren nicht dargestellt.

Darüber hinaus sind an dem Deckel 3a vier Ösen zum Transport der Vorrichtung 1 vorgesehen. An einer ersten Seitenwand 3c ist eine Eingabeeinrichtung 12 zur Eingabe von Akkumulatoren 2 in das Innere der Vorrichtung 1 positioniert. In dem vorliegenden Ausführungsbeispiel ist die Eingabeeinrichtung 12 in Form einer Kammer ausgestaltet. Das Volumen der Kammer ist dabei so gewählt, dass ein Akkumulator 2 in der Kammer positioniert werden kann, vgl. Figur 1. Die Eingabeeinrichtung 12 enthält eine Verriegelungseinrichtung 13a in Form einer Klappe, die um ein Scharnier schwenkbar gelagert ist. Die Klappe wird über einen Antrieb 14a bewegt, sodass die Verriegelungseinrichtung 13a in einem verriegelten oder entriegelten Zustand sich befinden kann. Die Verriegelungseinrichtung 13a der Eingabeeinrichtung 12 ist so mit der Steuerungseinrichtung 4 verbunden, dass die Klappe der Verriegelungseinrichtung 13a durch die Steuerungseinrichtung 4 wahlweise geöffnet oder geschlossen werden kann.

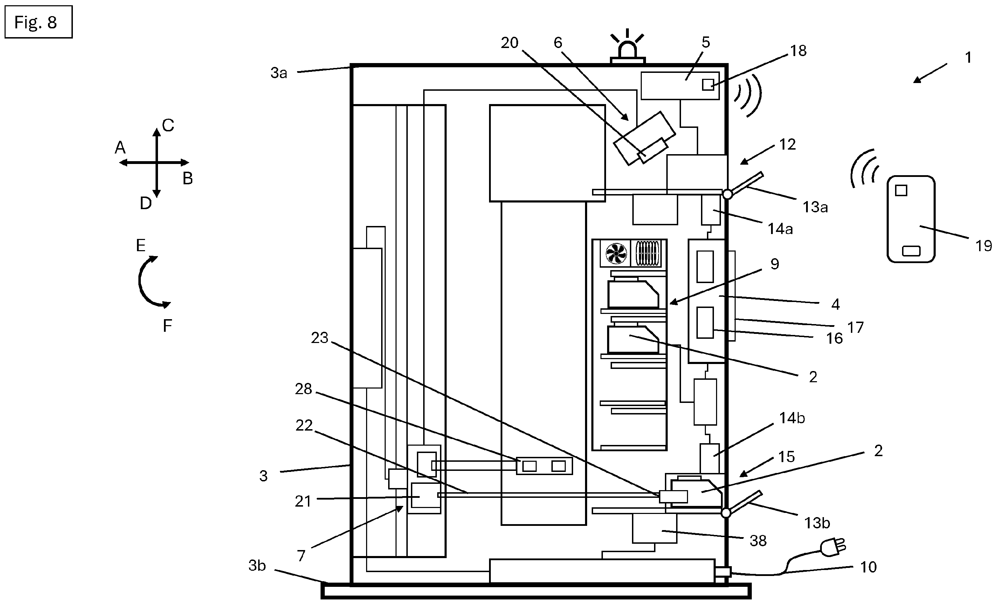

Des Weiteren ist an der ersten Seitenwand 3c eine Ausgabeeinrichtung 15 zur Ausgabe von Akkumulatoren 2 aus dem Innere der Vorrichtung 1 positioniert. In dem vorliegenden Ausführungsbeispiel ist die Ausgabeeinrichtung 15 in Form einer Kammer ausgestaltet. Das Volumen der Kammer ist dabei so gewählt, dass ein Akkumulator 2 in der Kammer positioniert werden kann, vgl. Figur 8. Die Ausgabeeinrichtung 15 enthält eine Verriegelungseinrichtung 13b in Form einer Klappe, die um ein Scharnier schwenkbar gelagert ist. Die Klappe wird über einen Antrieb 14b bewegt, sodass die Verriegelungseinrichtung 13b in einem verriegelten oder entriegelten Zustand sich befinden kann. Die Verriegelungseinrichtung 13b der Ausgabeeinrichtung 15 ist so mit der Steuerungseinrichtung 4 verbunden, dass die Klappe der Verriegelungseinrichtung 13b durch die Steuerungseinrichtung 4 wahlweise geöffnet oder geschlossen werden kann.

Die Steuerungseinrichtung 4 dient zum Steuem und Regeln der unterschiedlichen Funktionen der gesamten Vorrichtung 1 sowie einzelner Baugruppen und Komponenten. Die Steuerungseinrichtung 4 steuert und regelt insbesondere die Funktionen der Ladeeinrichtung 9. Wie nachfolgend noch im Detail beschrieben gehört zu den Funktionen der Ladeeinrichtung 9 das Steuern und Regeln einer Ladespannung bzw. einer Ladeleistung, wenn ein Akkumulator 2 zum Versorgen mit elektrischer Energie mit der Ladeeinrichtung 9 verbunden ist.

Die Steuerungseinrichtung 4 enthält eine Speichereinheit 16 auf, in der unterschiedliche Daten, Informationen, Parameter, Kennwerte, Schwellwerte, Algorithmen und dergleichen hinterlegt bzw. gespeichert sind.

Die Kommunikationseinrichtung 5 dient zum Ein- und Ausgeben von Signalen.

In dem vorliegenden Ausführungsbeispiel enthält die Kommunikationseinrichtung 5 eine Dateneingabeeinrichtung 17 (auch Man-Machine-Interface (MMI) genannt) und eine Funkverbindungseinrichtung 18.

Die Dateneingabeeinrichtung 17 ist an einer ersten Seitenwand 3c positioniert und weist einen Bildschirm (auch Display genannt) und eine Anzahl an Schaltern auf. Die Funkverbindungseinrichtung 18 ist als Bluetooth-Modul ausgestaltet, sodass Daten und Informationen zwischen der Vorrichtung 1 und einer externen Einrichtung 19 ausgetauscht werden können. In den Figuren ist eine externe Einrichtung 19 beispielhaft als Smartphone dargestellt. Alternativ ist die Funkverbindungseinrichtung 18 als WiFi-Modul oder als eigenständiges GSM/LTE/(2/2.5/3G/4G/5G (LTE)-Modul ausgestaltet.

Die Positionserfassungseinrichtung 6 dient zum Erfassen von einem oder mehreren Positionswerten eines Akkumulators 2, der ggf. willkürlich in die Vorrichtung 1 eingelegt wurde. Gemäß dem vorliegenden Ausführungsbeispiel enthält die Positionserfassungseinrichtung 6 eine Kamera 20 zum Erfassen der Position bzw. Orientierung des eingelegten Akkumulator 2 relativ zur Eingabeeinrichtung 12. Die Positionserfassungseinrichtung 6 ist mit der Ausrichtungseinrichtung 7 und der Steuerungseinrichtung 4 verbunden, sodass die von der Positionserfassungseinrichtung 6 erfassten Daten an die Ausrichtungseinrichtung 7 gesendet werden kann. Durch die gesendeten Daten der Positionserfassungseinrichtung 6 wird die Ausrichtungseinrichtung 7 entsprechend ausgerichtet, um einen Akkumulator 2 zu greifen.

Die Ausrichtungseinrichtung 7 dient zum Ausrichten eines Akkumulators 2 in unterschiedliche Richtungen und/oder um unterschiedliche Richtungsachsen. Hierzu enthält die Ausrichtungseinrichtung 7 einen Antrieb 21, eine in einer Länge (d.h. in Richtung A oder B) veränderbare Stange 22, eine erste Dreheinrichtung 23 und eine zweite Dreheinrichtung 24. Die Länge veränderbare Stange 22 ist gemäß dem vorliegenden Ausführungsbeispiel als Teleskopstange ausgestaltet. Die Stange 22 ist mit dem Antrieb 21 verbunden, sodass die Länge der Stange 22 in Richtung A oder B eingestellt werden kann.

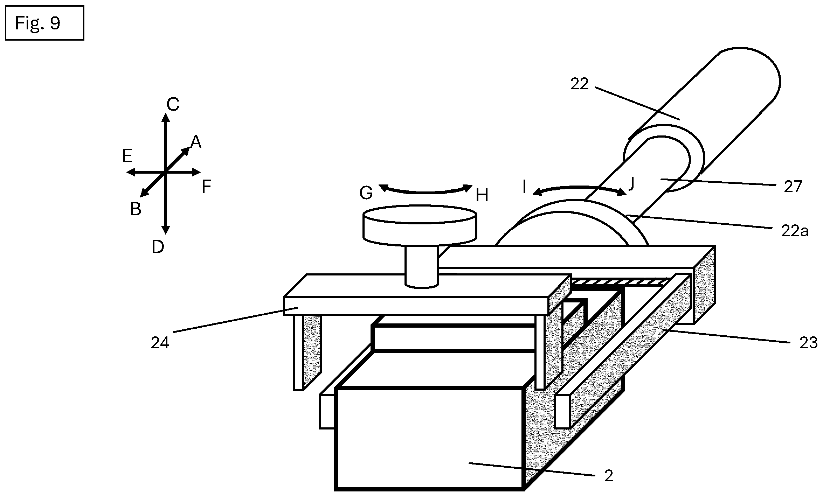

Die teleskopförmige Stange 22 weist ein erstes und zweites Ende 22a. 22b auf. Wie in Figur 1 angedeutet, ist das erste Ende 22a mit dem Antrieb 21 verbunden. An dem zweiten Ende 22b der Stange 22 ist die erste Dreheinrichtung 23, 24 positioniert, vgl. Figur 9.

Die erste Dreheinrichtung 23 enthält eine erste Greifeinheit 25 zum Greifen bzw. Aufnehmen eines Akkumulators 2 und die zweite Dreheinrichtung 24 enthält eine zweite Greifeinheit 26 zum Greifen bzw. Aufnehmen eines Akkumulators 2. Die erste Dreheinrichtung 23 kann wahlweise in Drehrichtung G oder H gedreht werden, die erste Dreheinrichtung 23 ist dazu über eine erste Welle 27 und einem Antriebsriemen mit dem Antrieb 21 der Ausrichtungseinrichtung 7 verbunden. Die erste Welle 27 und die Stange 22 können dabei dasselbe Bauteil sein. Der Antriebsriemen ist in den Figuren nicht gezeigt.

Die zweite Dreheinrichtung 24 kann wahlweise in Drehrichtung I oder J gedreht werden, die zweite Dreheinrichtung 24 ist dazu über eine zweite Welle mit dem Antrieb 21 der Ausrichtungseinrichtung 7 verbunden. Die zweite Welle ist in den Figuren nicht gezeigt.

Die erste und zweite Dreheinrichtung 23, 24 greifen nacheinander an den Akkumulator 2 zum Ausrichten an. Die erste Dreheinrichtung 23 ist in Richtung C oder D sowie in E oder F beweglich. Die zweite Dreheinrichtung 24 ist in Richtung C oder D sowie in E oder F beweglich.

Eine erste Anzahl an Sensoren 8 zum Erfassen von Kennwerten des in die Vorrichtung 1 aufgenommenen Akkumulators 2 sind an einer Sensorhalteeinrichtung 28 positioniert. Gemäß einer beispielhaften Ausführungsform ist die Sensorhalteinrichtung 28 in Pfeilrichtung C über der Ausrichtungseinrichtung 7 so positioniert, dass die Sensoren 8 mit der Schnittstelle 2a eines Akkumulators 2 verbunden werden können, wenn der Akkumulator 2 von der Ausrichtungseinrichtung 7 entsprechend ausgerichtet und noch von der Ausrichtungseinrichtung 7 gehalten wird. Die Sensoren 8 sind in Form eines Spannungssensors (Voltmeter), eines Temperatursensors sowie eines Stromstärkesensors (Amperemeter) ausgestaltet. Darüber hinaus ist ein Sensor zum Auslesen von Identifikationsdaten enthalten, um den Typ bzw. die Art des Akkumulators 2 zu erfassen. Alternativ oder zusätzlich kann eine Kamera enthalten sein, um das optische Erscheinungsbild des Akkumulators 2 zu erfassen und anschließend mit einer in der Speichereinheit 16 hinterlegten Datenbank zur Identifikation des Akkumulators 2 zu vergleichen. Es ist dabei auch möglich, dass zur Identifikation des Akkumulators 2 die Kamera der Positionserfassungseinrichtung 6 verwendet wird.

Die Ladeeinrichtung 9 dient zum Versorgen von Akkumulatoren 2 mit elektrischer Energie. Wie in den Figuren angedeutet, ist die Ladevorrichtung 9 in Form eines Regals mit vier Ladeeinheit 29 dargestellt. Alternativ kann die Ladeeinrichtung 9 mehr oder weniger als vier Ladeeinheiten 29 enthalten. Jede Ladeeinheit 29 enthält eine Schnittstelle 30 zum wiederlösbaren Verbinden der Ladeeinheit 29 mit jeweils einem Akkumulator 2. Über die Schnittstelle 30 kann ein Akkumulator 2 mit elektrischer Energie versorgt werden. Des Weiteren enthält jede Ladeeinheit 29 eine zweite Anzahl an Sensoren 31 zum Erfassen von Kennwerten des Akkumulators 2. Darüber hinaus kann mittels der Schnittstelle 30 eine Kommunikationsverbindung zwischen einem Akkumulator 2 und der Ladeeinrichtung 9 zum Austauschen von Daten und Informationen erzeugt werden. Zu den Daten und Informationen gehört unter anderen von den Sensoren 31 erfasste Kennwerte der Akkumulatoren 2. Zu den Kennwerten gehört unter anderem der aktuelle Ladezustand (= SoC) des zu ladenden Akkumulators 2.

Wie in Figur 1 angedeutet, kann die Vorrichtung 1 an einer ersten Seitenwand 3c eine Fensterscheibe 32 aufweisen. Durch die Fensterscheibe 32 kann unter anderem die Ladeeinrichtung 9 eingesehen werden. Gemäß einer alternativen Ausführungsform kann die Fensterscheibe 32 als Tür mit einer Verriegelungseinheit ausgestaltet sein. Die Verriegelungseinheit ist mit der Steuerungseinrichtung 4 und Kommunikationseinrichtung 5 verbunden, sodass die Verriegelungseinheit gesteuert werden kann.

Wie in den Figuren angedeutet, ist an der Ladeeinrichtung 9 eine Temperaturregeleinrichtung 33 positioniert. Die Temperaturregeleinrichtung 33 dient zum Erfassen von Temperaturwerten sowie zum wahlweisen Kühlen oder Heizen der Ladevorrichtung 9. Die Temperaturregeleinrichtung 33 enthält dabei im Wesentlichen einen Temperatursensor 34, eine Kühleinheit 36 in Form eines Lüfter und eine Heizeinheit 35 in Form einer Heizung.

Der Temperatursensor 34, die Heizung 35 und die zwei Lüfter 36 sind über Leitungen so mit der Steuerungseinrichtung 4 verbunden, dass von dem Temperatursensor 34 erfasste Temperaturwerte an die Steuerungseinrichtung 4 gesendet werden können. Wenn ein erfasster Temperaturwert einem bestimmten in der Speichereinheit 16 hinterlegten Schwellwert entspricht., wird die Heizung 35 und/oder die Lüfter 36 aktiviert oder deaktiviert.

Des Weiteren kann gemäß einer alternativen Ausführungsform jede Ladeeinheit 29 der Ladeeinrichtung 9 eine Zugangsklappe 37 aufweisen, vgl. Figur 11. Wie in Figur angedeutet ist jede Zugangsklappe 37 an einer (in den Figuren nicht gezeigten) dritten Seitenwand 3c positioniert. Jede Zugangsklappe 37 enthält ein Scharnier und ein elektronisch bedienbares Schloss. Jedes Schloss der Zugangsklappen 37 ist individuell mit der Steuerungseinrichtung 4 verbunden. Die Steuerungseinrichtung 4 kann den Zugang zu einer Ladeeinheit 29 steuern, indem ein entsprechendes Signal von der Steuerungseinrichtung 4 an ein Schloss einer Zugangsklappe 37 gesendet wird. Durch entsprechende Signale von der Steuerungseinrichtung 4 wird das Schloss einer Zugangsklappe 37 entweder in einen verriegelten oder entriegelten Zustand versetzt. Durch die Kommunikationseinrichtung 5 kann ein entsprechender Befehl über die Steuerungseinrichtung 4 an ein Schloss einer Zugangsklappe 37 gesendet werden, sodass eine Zugangsklappe 37 verriegelt oder entriegelt wird.

Die Energieversorgung 10 ist über einen Gleichspannungswandler 38 und der Steuerungseinrichtung 4 so mit der Ladeeinrichtung 9 verbunden, dass elektrische Energie zu den Akkumulatoren 2 gelangen kann. In dem vorliegenden Ausführungsbeispiel ist die Energieversorgung 10 mit einem Stromkabel zum Verbinden der Vorrichtung 1 mit einer Netzstromquelle (Netzstromspannung 120V, 230V oder 400V) ausgestattet. Alternativ oder zusätzlich kann die Vorrichtung 1 eine Photovoltaik, eine Windrad, eine Brennstoffzelle oder dergleichen zum Erzeugen von elektrischer Energie vorhanden sein. Die Energieversorgung 10 kann auch als Akkumulator ausgestaltet sein.

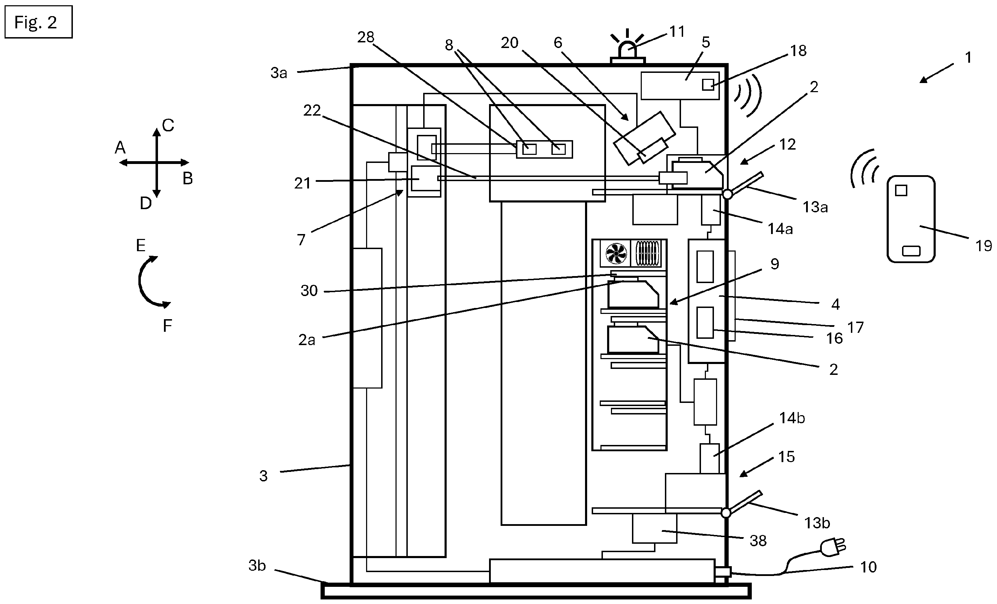

Zur Durchführung erfindungsgemäßen Verfahrens sind im Wesentlichen die in Figur 2 bis 8 gezeigten bespielhaften Verfahrensschritte enthalten.

In Figur 2 ist eine Vorrichtung 1 in einem ersten Zustand dargestellt. Mit Hilfe eines als Smartphone ausgestalteten externen Einrichtung 19 wird ein entsprechendes Signal an die Kommunikationseinrichtung 5 gesendet. Das Signal wird an die Steuerungseinrichtung 4 weitergeleitet und evaluiert. Wenn das Signal vorbestimmten Kriterien entspricht, wird ein entsprechendes Signal an die Verriegelungseinrichtung 13a der Eingabeeinrichtung 12 gesendet, sodass die Verriegelungseinrichtung 13a von einem verriegelten Zustand in einen entriegelten Zustand versetzt wird. Die als Klappe ausgestaltete Verriegelungseinrichtung 13a der Eingabeeinrichtung 12 wird in Drehrichtung E gedreht und das Innere der Eingabeeinrichtung 12 wird für die Aufnahme eines Akkumulators 2 freigegeben.

Das Einlegen des Akkumulators 2 in die Eingabeeinrichtung 12 wird durch die Kamera der Positionserfassungseinrichtung 6 erfasst und ein entsprechendes Signal wird an die Steuerungseinrichtung gesendet. Durch das Signal wird die Klappe der Eingabeeinrichtung 12 in Drehrichtung F gedreht und die Eingabeeinrichtung 12 wieder verschlossen.

Anschließend erfasst die Kamera der Positionserfassungseinrichtung die Position bzw. die Ausrichtung des Akkumulators 2 in der Eingabeeinrichtung 12. Ein entsprechendes Signal wird an die Steuerungseinrichtung 4 gesendet. Die Steuerungseinrichtung 4 sendet wiederum ein Signal an die Ausrichtungseinrichtung 7 zur Ausrichtung des Akkumulators 2 in eine vorbestimmte Ausrichtung bzw. Orientierung, wenn sich der Akkumulator 2 noch nicht in der vorbestimmte Ausrichtung bzw. Orientierung befindet. Die Ausrichtung des Akkumulators 2 dient vor allem dazu, dass die Schnittstelle 2a des Akkumulators 2 in eine vorbestimmte Position bzw. Orientierung gebracht wird.

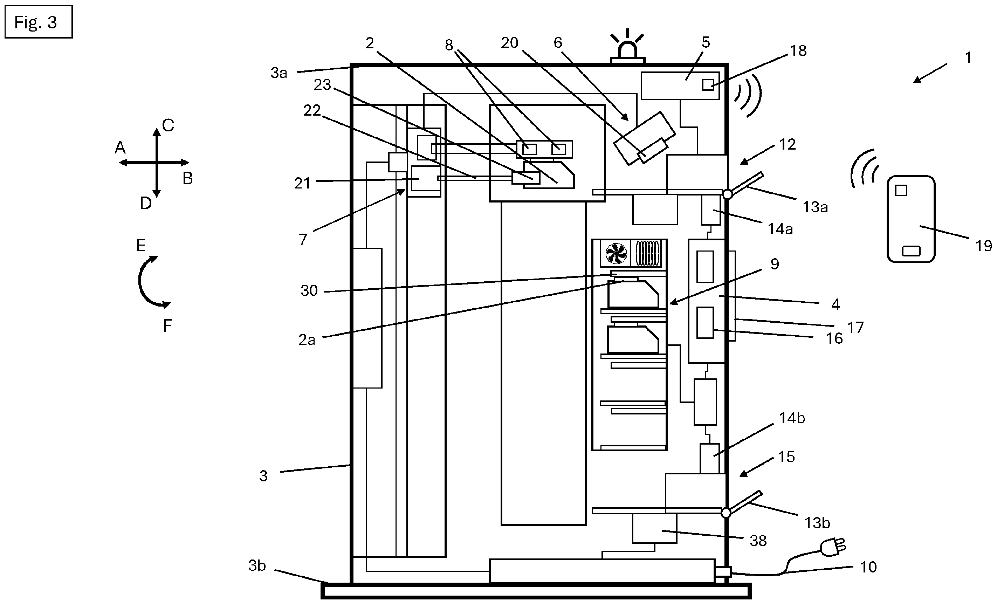

Wie in Figur 3 gezeigt ist der Akkumulator 2 von der Ausrichtungseinrichtung 7 in Pfeilrichtung A gebracht worden, sodass der Akkumulator 2 mit der Sensorhalteinrichtung 28 in Verbindung gebracht werden kann. Mit Hilfe der Sensoren 8 werden die unterschiedlichen Kennwerte und auch die Identifikation des Akkumulator 2 erfasst. In dem Fall, dass ein Kennwert einem vorbestimmten Kontrollwert oder Schwellwert entspricht, kann mittels der Ausrichtungseinrichtung 7 der entsprechende Akkumulator 2 entweder durch die Eingabeeinrichtung 12 oder durch die Ausgabeeinrichtung 15 aus der Vorrichtung 1 entfernt werden. Dies kann beispielsweise der Fall sein, wenn ein Temperaturwert eines Akkumulators 2 einem in der Steuerungseinrichtung 4 bzw. in der Speichereinheit 16 hinterlegten Schwellwert entspricht oder sogar diesen Schwellwert übersteigt.

Die von den Sensoren 31 der Sensorhalteinrichtung 28 erfassten Kennwerte werden an die Steuerungseinrichtung 4 gesendet. Es ist möglich, dass ein Anwender über die Dateneingabeeinrichtung 17 oder die Funkverbindungseinrichtung 18 der Kommunikationseinrichtung 5 entsprechende Befehle in die Steuerungseinrichtung 4 eingibt. Ein Befehl kann beispielsweise die Aufforderung zum Laden des zuvor eingeführten Akkumulators 2 bis zu einem bestimmten Ladezustand (z.B. 80% SoC) sein.

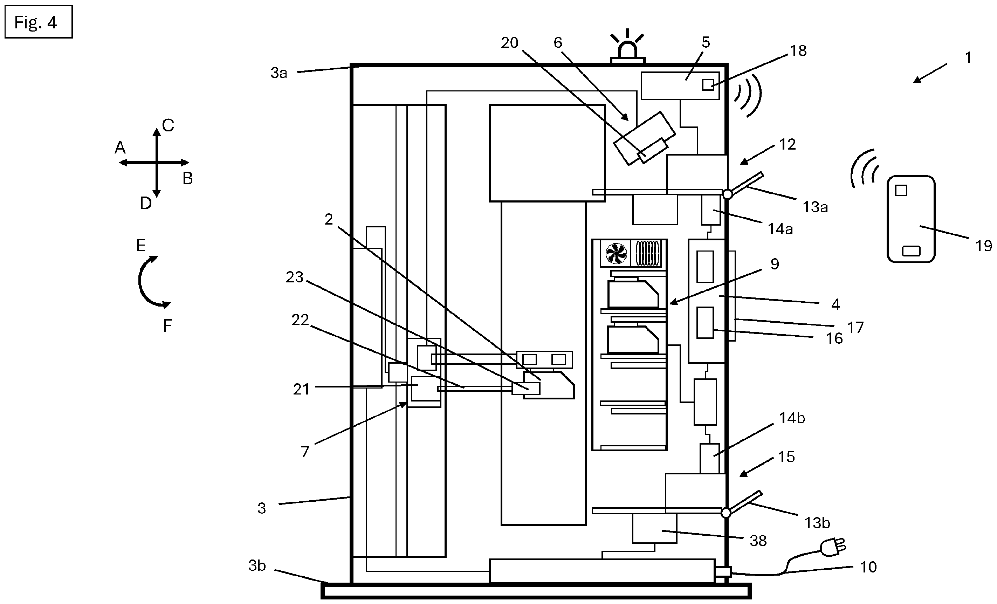

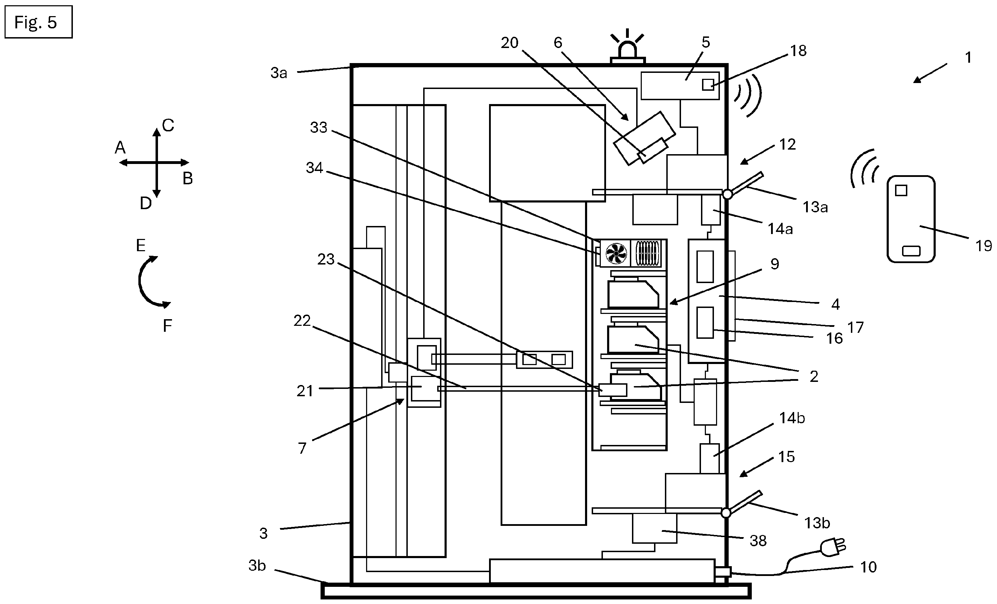

In Abhängigkeit der von den Sensoren erfassten Kennwerte des Akkumulators 2 sowie der eingegebenen Befehle in die Steuerungseinrichtung 4 wird eine bestimmte Funktion der Vorrichtung 1 durchgeführt und durch die Steuerungseinrichtung 4 überwacht. Wenn der entsprechende Sensor einen Ladezustand des Akkumulators 2 erfasst der geringer ist als der gewünschte (d.h. vom Anwender angegebene) Ladezustand, wird der Akkumulator 2 von der Ausrichtungseinrichtung 7 in eine freie Ladeeinheit 29 der Ladeeinrichtung 9 befördert, vgl. Figur 4 und 5. Die Schnittstelle 2a des Akkumulators 2 wird mit der Schnittstelle 30 des Ladeeinheit 29 so verbunden, dass der Akkumulator 2 mit elektrischer Energie versorgt werden kann. Der Ladezustand zu Beginn des Ladevorgangs sowie der aktuelle bzw. sich verändernde Ladezustand wird von den entsprechenden Sensoren 31 der Ladeeinheit 29 erfasst und an die Steuerungseinrichtung 4 zur Überwachung bzw. zum Steuern und Regeln des Ladevorgangs gesendet.

Wenn der gewünschte Ladezustand des Akkumulators 2 erreicht ist, wird ein entsprechendes Signal an die Steuerungseinrichtung 4 gesendet. Der Ladevorgang wird daraufhin beendet. Ein entsprechendes Signal wird anschließend von der Steuerungseinrichtung 4 über die Kommunikationseinrichtung 5 ausgesendet, sodass ein Anwender den Ladestatus des Akkumulators 2 übermittelt bzw. über das Ende des Ladevorgangs informiert wird.

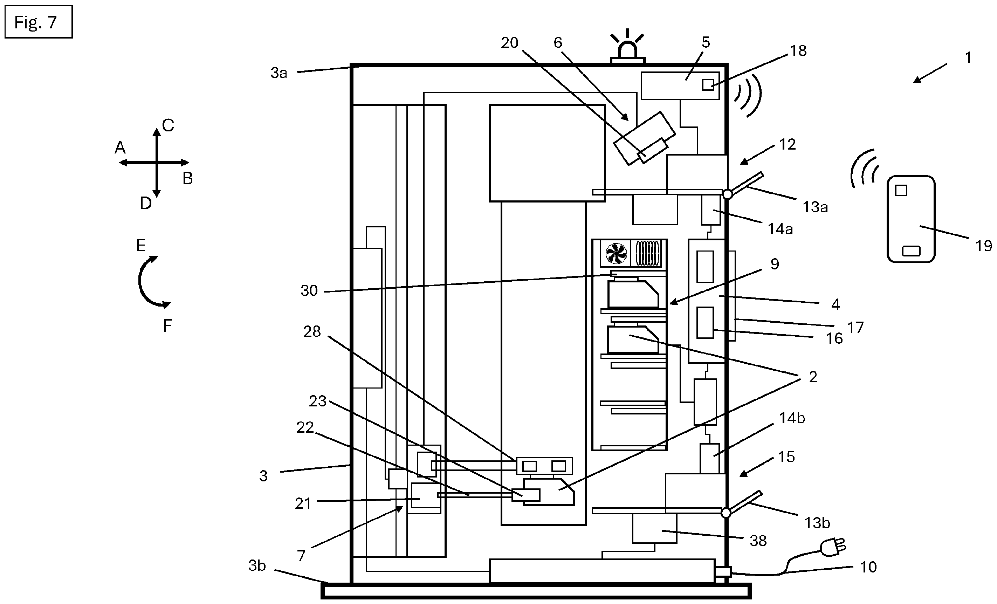

Der Anwender kann daraufhin ein entsprechendes Signal über die Kommunikationseinrichtung 5 an die Steuerungseinrichtung 4 senden, sodass der entsprechend aufgeladene Akkumulator 2 ausgegeben werden soll. Die Steuerungseinrichtung 4 sendet daraufhin ein entsprechendes Signal an die Ausrichtungseinrichtung 7, sodass die Ausrichtungseinrichtung 7 den Akkumulator 2 aus der Ladeeinheit 29 entnimmt und in die Ausgabeeinrichtung 15 legt, vgl. Figur 7 und 8. Zum Öffnen der Klappe der Ausgabeeinrichtung 15 wird wieder ein entsprechendes Signal von der Steuerungseinrichtung 4 an die Ausgabeeinrichtung 15 gesendet.

### Bezugszeichen

- 1: Vorrichtung
- 2: Akkumulator
- 2a: Schnittstelle des Akkumulators
- 3: Gehäuse
- 3a: Deckel des Gehäuses
- 3b: Boden des Gehäuses
- 3c: Seitenwände
- 4: Steuerungseinrichtung
- 5: Kommunikationseinrichtung
- 6: Positionserfassungseinrichtung
- 7: Ausrichtungseinrichtung
- 8: Sensoren
- 9: Ladeeinrichtung
- 10: Energieversorgung
- 11: Signallampe
- 12: Eingabeeinrichtung
- 13a: Verriegelungseinrichtung der Eingabeeinrichtung
- 13b: Verriegelungseinrichtung der Ausgabeeinrichtung
- 14a: Antrieb der Verriegelungseinrichtung der Eingabeeinrichtung
- 14b: Antrieb der Verriegelungseinrichtung der Ausgabeeinrichtung
- 15: Ausgabeeinrichtung
- 16: Speichereinheit
- 17: Dateneingabeeinrichtung
- 18: Funkverbindungseinrichtung
- 19: externe Einrichtung
- 20: Kamera der Positionserfassungseinrichtung
- 21: Antrieb der Ausrichtungseinrichtung
- 22: Stange
- 22a: erstes Ende der Stange
- 22b: zweites Ende der Stange
- 23: erste Dreheinrichtung
- 24: zweite Dreheinrichtung
- 25: erste Greifeinheit
- 26: zweite Greifeinheit
- 27: erste Welle
- 28: Sensorhalteeinrichtung
- 29: Ladeeinheit
- 30: Schnittstelle der Ladeeinheit
- 31: Sensoren der Ladeeinheit
- 32: Fensterscheibe
- 33: Temperaturregeleinrichtung
- 34: Temperatursensor
- 35: Heizeinheit
- 36: Kühleinheit
- 37: Zugangsklappe der Ladeeinrichtung
- 38: Gleichspannungswandler

## Patentansprüche

1. Vorrichtung (1) zum Aufbewahren und Versorgen einer Anzahl an Akkumulatoren (2), insbesondere als Energiespeicher für eine Werkzeugmaschine mit elektrischer Energie, **gekennzeichnet durch**
- ein Gehäuse (3) mit wenigstens einer Eingabeeinrichtung (12) zur Eingabe wenigstens eines Akkumulators (2) in die Vorrichtung (1) sowie wenigstens eine Ausgabeeinrichtung (15) zur Ausgabe wenigstens eines Akkumulators (2) aus der Vorrichtung (1);
- eine Steuerungseinrichtung (4) mit wenigstens einer Speichereinheit (16);
- eine Kommunikationseinrichtung (5) zum Ein- und Ausgeben von Signalen;
- eine Positionserfassungseinrichtung (6) zum Erfassen wenigstens eines Positionswertes eines Akkumulators (2);
- eine Ausrichtungseinrichtung (7) zum Ausrichten wenigstens eines Akkumulators (2) in wenigstens eine Richtung und/oder um wenigstens eine Richtungsachse;
- wenigstens einen Sensor (8, 31) zum Erfassen wenigstens eines Kennwertes des wenigstens einen Akkumulators (2);
- wenigstens eine Ladeeinrichtung (9) zum Versorgen wenigstens eines Akkumulators (2) mit elektrischer Energie; sowie
- eine Energieversorgung (10).

2. Vorrichtung (1) nach Anspruch 1,
**dadurch gekennzeichnet, dass** die Ausrichtungseinrichtung (7) wenigstens erste Dreheinrichtung (23) und eine zweite Dreheinrichtung (24) enthält.

3. Vorrichtung (1) nach Anspruch 1 oder 2,
**dadurch gekennzeichnet, dass** eine Lagereinrichtung (9) zum Aufnehmen und Lagern wenigstens eines Akkumulators (2) enthalten ist.

4. Vorrichtung (1) nach wenigsten einem der vorstehenden Ansprüche,
**dadurch gekennzeichnet, dass** eine Temperaturregeleinrichtung (33) mit wenigstens einem Temperatursensor (34), wenigstens einer Kühleinheit (36) und wenigstens einer Heizeinheit (35) enthalten ist.

5. Verfahren zum Steuern und Regeln einer Vorrichtung (1) nach wenigstens einem der Ansprüche 1 bis 4, enthaltend wenigstens die Verfahrensschritte:
- Einführen wenigstens eines Akkumulators (2) in die Vorrichtung (1) durch wenigstens eine Eingabeeinrichtung (12);
- Erfassen wenigstens eines Positionswertes des wenigstens einen Akkumulators (2) durch eine Positionserfassungseinrichtung (6);
- Ausrichten des wenigstens eines Akkumulators (2) in wenigstens eine Richtung und/oder um wenigstens eine Ausrichtungsachse;
- Erfassen wenigstens eines Kennwertes des wenigstens einen Akkumulators (2) durch wenigstens einen Sensor (8, 31);
- Verbinden des wenigstens einen Akkumulators (2) mit einer Ladeeinrichtung (9) zum Versorgen wenigstens eines Akkumulators (2) mit elektrischer Energie in Abhängigkeit wenigstens eines erfassten Kennwertes; und
- Aussenden wenigstens eines Signals durch die Kommunikationseinrichtung (5), wenn wenigstens ein Ladezustandswert des wenigstens einen Akkumulators (2) wenigstens einem in einer Speichereinheit (16) der Vorrichtung hinterlegten Wert entspricht.

6. Verfahren nach Anspruch 5,
**gekennzeichnet durch** den Verfahrensschritt:
- Ausgeben des wenigstens einen Akkumulators (2) aus der Vorrichtung (1) durch die Eingabeeinrichtung (12) oder die Ausgabeeinrichtung (15), wenn wenigstens ein vorbestimmtes Signal zur Ausgabe des wenigstens einen Akkumulators (2) von der Kommunikationseinrichtung (5) empfangen worden ist.

7. Verfahren nach Anspruch 5 oder 6,
**gekennzeichnet durch** den Verfahrensschritt:
- Aussenden wenigstens eines Signals durch die Kommunikationseinrichtung (5), wenn der wenigstens eine erfasste Kennwert des wenigstens einen Akkumulators (2) nicht wenigstens einem in einer Speichereinheit (16) der Vorrichtung (1) hinterlegten Wert entspricht.

8. Verfahren nach wenigstens einem der Ansprüche 5 bis 7,
**gekennzeichnet durch** den Verfahrensschritt:
- Ausgeben des wenigstens einen Akkumulators (2) aus der Vorrichtung (1) durch die Eingabeeinrichtung (12) oder eine Ausgabeeinrichtung (15), wenn der wenigstens eine erfasste Kennwert nicht wenigstens einem in einer Speichereinheit (16) der Vorrichtung (1) hinterlegten Wert entspricht.
